# EUROPÄISCHE PATENTSCHRIFT

(11) **EP 0 852 697 B1**
(45) Veröffentlichungstag und Bekanntmachung des Hinweises auf die Patenterteilung: **21.11.2001**
(21) Anmeldenummer: 96928314.2
(22) Anmeldetag: 12.09.1996
(51) Int. Cl.: G01C 9/28

(54) **MAGNET-WASSERWAAGE**
MAGNETIC SPIRIT LEVEL
NIVEAU A BULLE MAGNETIQUE

(30) Priorität: 29.09.1995 CH 275195
(43) Veröffentlichungstag der Anmeldung: 15.07.1998
(73) Patentinhaber: Mapo AG, 8152 Glattbrugg (CH)
(72) Erfinder: MÄCHLER, Werner, CH-8123 Ebmatingen (CH)
(74) Vertreter: Patentanwälte Feldmann & Partner AG
(86) Internationale Anmeldenummer: CH9600314
(87) Internationale Veröffentlichungsnummer: WO9713119

(56) Entgegenhaltungen:
- EP-A- 0 281 933
- DE-A- 3 314 509

## Beschreibung

Die vorliegende Erfindung betrifft eine Wasserwaage gemäss Oberbegriff des Patentanspruches 1.

Wasserwaagen dienen zum Einstellen und Prüfen von genauen horizontalen und vertikalen Lagen sowie zum Messen von Neigungen und Höhenunterschieden. Die Genauigkeit der Wasserwaage ist einerseits von der Empfindlichkeit der eingebauten Libelle abhängig, die als Sensor und Anzeige dient. Andererseits hängt die Genauigkeit auch von der Güte der Oberfläche der Wasserwaage ab, wobei die Oberfläche vollständig plan sein muss. In einer bekannten Ausführungsform besteht deshalb die Wasserwaage im wesentlichen aus einer verzugsfreien Hohlprofilschiene mit rechteckigem Querschnitt, in der eine oder mehrere Libellen gehalten sind.

Es sind Wasserwaagen mit Magnethaftung bekannt, die durch ihre Haftfähigkeit an Metallflächen einfacher zu handhaben sind. Hierfür sind in der Seitenwand des Wasserwaagenkörpers Magnete eingelagert. Bei der Herstellung muss für jedes Magnet ein Langloch in die Seitenwand der Hohlprofilschiene gefräst werden, in das ein Kunststoffhalter zur Aufnahme des Magnetes eingeklemmt wird. Der Magnet sowie beidseitig angeordnete ferromagnetische Plättchen werden in den Kunststoffhalter eingelegt und der verbleibende Hohlraum des Halters wird mittels einem aushärtenden Material, zum Beispiel Kunstharz, ausgefüllt, so dass Magnet und Magnethalter fixiert werden. Die Oberfläche der Seitenwand der Hohlprofilschiene wird anschliessend plangeschliffen, um Unebenheiten zu entfernen, die die Genauigkeit der Wasserwaage beeinträchtigen könnten.

Diese Einarbeitung der Magnete ist zeitaufwendig und erfordert eine Vielzahl von manuellen wie auch maschinellen Arbeitsschritten. Dadurch werden die Produktionskosten derartiger Magnet-Wasserwaagen erhöht. Durch das anschliessende Planschleifen erhöht sich das Risiko, dass die gewünschte Genauigkeit nicht eingehalten werden kann.

Aus DE-A-33'14'509 ist ferner eine Magnetwasserwaage bestehend aus einem Hohlkörper bekannt, dessen eine Breitseite mit einem Deckel abgeschlossen ist. Im Hohlkörper sind Aufnahmegehäuse für Haftmagnete einstückig angeformt, wobei an einer Schmalseite des Hohlkörpers Durchbrechungen vorhanden sind, durch welche die Haftmagnete bis zur Standfläche der Wasserwaage hindurchragen. Die äussere Oberfläche fluchtet dabei mit der äusseren Oberfläche der Schmalseite.

EP-A-0'281'933 beschreibt eine Wasserwaage aus einem Hohlprofil mit einem Libellenhalter, welcher mit vormontierter Libelle in Form eines Einschiebeelementes in axialer Richtung in das Hohlprofil einschiebbar ist, bis die Libelle in einem Fenster des Hohlprofils sichtbar wird.

Es ist deshalb Aufgabe der Erfindung, eine Magnet-Wasserwaage zu schaffen, die auf einfache Weise gefertigt werden kann.

Diese Aufgabe löst eine Magnet-Wasserwaage mit den Merkmalen des Patentanspruches 1.

Da der Magnet innerhalb des Körpers befestigt ist, erübrigt sich ein nachträgliches Bearbeiten des Körpers. Es müssen keine Oeffnungen für die Magnete eingefräst werden. Die für die Montage des Magneten notwendigen Elemente können alle vorgefertigt und anschliessend an einem einzigen Arbeitsplatz und ohne maschinellen Einsatz in die Wasserwaage montiert werden. Dadurch wird die Herstellung erleichtert und die Produktionskosten werden wesentlich gesenkt.
Da die Oberfläche des Wasserwaagen-Körpers intakt bleibt, kann die Masshaltigkeit gewährleistet werden, so dass auch die Ausschussrate in der Produktion vermindert wird.
Es hat sich gezeigt, dass genügend starke Magnete erhältlich sind, welche durch die Wandungen des Wasserwaagenkörpers wirken können. Die Haftung ist auch bei Verwendung von Wasserwaagen-körper aus paramagnetischen Leichtmetallen, beispielsweise aus Aluminium, ausreichend. Bevorzugterweise liegt der Magnet an einer Innenseite des Wasserwaagen-Körpers an. Bei genügend starken Magneten oder dünnen Wandungen kann zwischen Magnet und Innenwandung jedoch auch ein kleiner Luftspalt vorhanden sein.

Der Magnet ist auf einem Magnethalter befestigt, der in den Wasserwaagen-Körper einschiebbar ist, wobei er im Körper gefedert haltbar ist oder mit diesem verklebt wird. Der Magnethalter kann ein- oder mehrteilig geformt sein und einen oder mehrere Magnete aufnehmen. Ebenso können pro Wasserwaagenkörper mehrere Magnethalter vorhanden sein.

In den beiliegenden Zeichnungen sind Ausführungsbeispiele des Erfindungsgegenstandes dargestellt, welche in der nachfolgenden Beschreibung erläutert werden. Es zeigen
- Figur 1: eine Ansicht einer erfindungsgemässen Wasserwaage von oben, teilweise im Schnitt dargestellt;
- Figur 2: eine Seitenansicht eines Teils der Wasserwaage nach Figur 1, teilweise im Schnitt dargestellt;
- Figur 3: einen Schnitt durch eine weitere Ausführungsform des erfindungsgemässen Magnethalters und
- Figur 4: eine Ansicht einer dritten Ausführungsform des erfindungsgemässen Magnethalters.

Die erfindungsgemässe Wasserwaage besteht im wesentlichen aus einem Körper 1, mindestens einer Libelle 2,2', mindestens einem Magneten 4 und einem oder mehreren Einschiebeelementen. Die Einschiebeelemente dienen als Libellenhalter 3 sowie als Magnethalter 5. Werden der Libellenhalter 3 und der Magnethalter 5 durch identisch geformte, ein- oder mehrteilige Einschiebeelemente gebildet, so wird die Produktion vereinfacht.

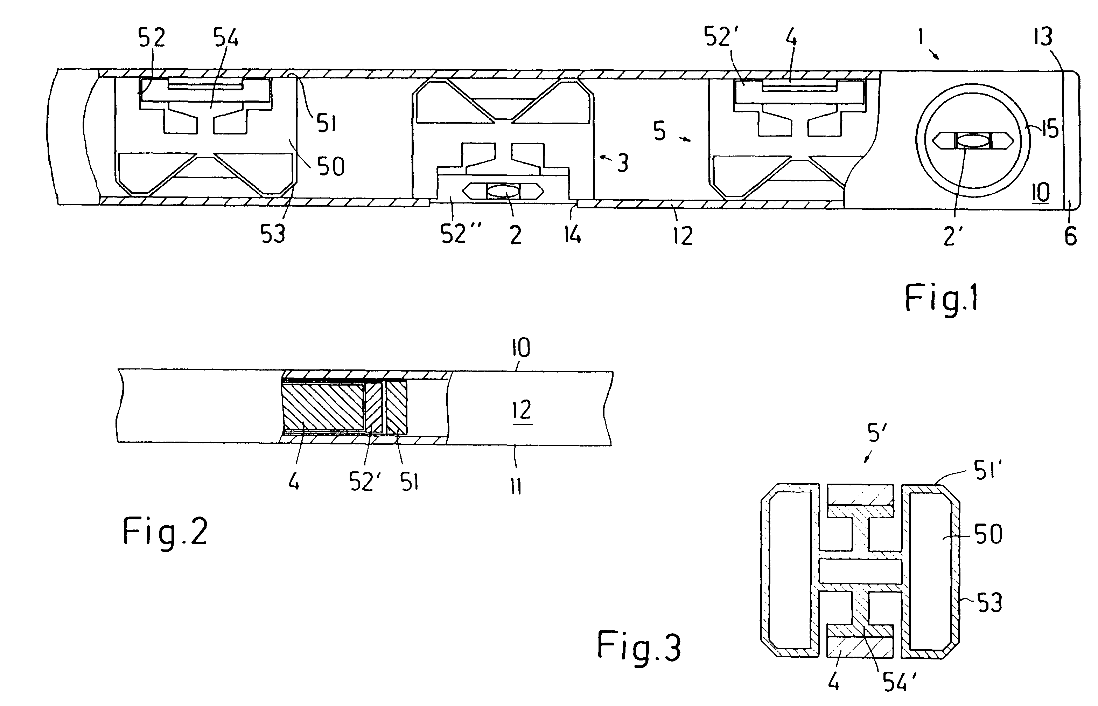

Der in Figur 1 dargestellte Wasserwaagen-Körper 1 ist aus einer Hohlprofilschiene mit rechtwinkligem Querschnitt gefertigt. Deren breite Seiten bilden die Oberseite 10 und die Unterseite 11 des Körpers 1. Die schmalen, langen Seiten bilden die Seitenwände 12 und die kurzen Seiten die Stirnflächen 13.

Eine der Seitenwände 12 weist ein Langloch 14 auf. An der Ober- und Unterseite 10,11 ist an der entsprechenden Stelle eine Ausnehmung vorhanden. An dieser Stelle ist eine Haupt-Libelle 2 in den Körper 1 eingelassen, so dass sie von drei Seiten her sichtbar ist. Entlang dieser Seitenwand 12 kann auf der Oberseite 10 des Körpers 1 ein Massstab eingezeichnet sein.

In dieser Ausführungsform weist die Ober- und Unterseite 10,11 des Körpers 1 je ein mit dem anderen fluchtendes Rundloch 15 auf. An dieser Stelle ist eine Querlibelle 2' vorhanden, die mittels einem hier nicht sichtbaren Querlibellen-Halter befestigt ist.

Die Haupt-Libelle 2 ist auf dem Einschiebeelement, das hier als Libellenhalter 3 dient, befestigt. Der Libellenhalter 3 ist bevorzugterweise aus Kunststoff gefertigt. Seine Form wird weiter unten anhand des Magnethalters 5 beschrieben. Der Libellenhalter 3 lässt sich über das Langloch 14 in den Wasserwaagen-Körper 1 einführen, wobei eine Kippbewegung ausgeführt werden muss. Anschliessend wird die Haupt-Libelle 2 mittels Schraub- oder Klebverbindung am Libellenhalter 3 befestigt, der fixiert im Körper 1 gehalten ist.

Die erfindungsgemässe Wasserwaage weist mindestens einen Magneten 4 zur Haftung der Wasserwaage an einer beliebigen ferromagnetischen Messfläche auf, wobei der Magnet 4 im Innern des Wasserwaagen-Körpers 1 angeordnet ist, sich hinter der intakten Seitenwand befindet und so durch die Seitenwand von der Messstelle getrennt auf diese wirkt.
In der hier dargestellten Ausführungsform ist beiderseits der Haupt-Libelle 2 je ein Magnet 4 vorhanden, wobei beide Magnete 4 zu derselben Seitenwand 12 der Wasserwaage hin gerichtet sind. Andere Anordnungen sind möglich.

Jeder Magnet 4 ist auf einem Einschiebeelement aus Kunststoff angeordnet, das als Magnethalter 5 dient. Er besteht aus einem Einschiebekörper 50, der auf einer Seite zwei symmetrische, beabstandet voneinander liegende Anlageflächen 51 und auf der anderen Seite zwei symmetrische, federnde Abstützbeine 53 aufweist. Der Einschiebekörper 50 ist so geformt, dass zwischen den symmetrischen Anlageflächen 51 eine Aufnahmeöffnung 52 gebildet wird. In diese Aufnahmeöffnung 52 ragt eine zentrisch angeordnete, federnde Andruckplatte 54, die mit dem Einschiebekörper 50 verbunden ist. Die Querschnittsform des Einschiebeelementes gleicht einem W, wobei die äusseren Schenkel jedoch parallel zueinander verlaufen.

In der Aufnahmeöffnung 52 ist der Magnet 4 befestigt, wobei er zusätzlich durch ferromagnetische Plättchen verstärkt ist. Er ist hierfür in einem Aufnahmeelement 52' gehalten, das an der Andruckplatte 54 befestigt ist. Das Aufnahmeelement 52' kann ein integrales Bestandteil des Einschiebeelementes sein oder auch gemeinsam mit dem Magneten 4 befestigt werden. Magnet 4 und Aufnahmeelement 52' sind mit üblichen Mitteln befestigt, sie können beispielsweise geklemmt oder geklebt sein. Die Dicke des Magnetes 4 ist so bemessen, dass er dem Magnethalter 5, insbesondere den Anlageflächen 51 und dem Aufnahmeelement 52', leicht vorsteht, so dass er im montierten Zustand gefedert an der inneren Seitenfläche 10 des Wasserwaage-Körpers 1 angepresst wird.

Dient das Einschiebeelement als Libellenhalter 3, so ist auf der Andruckplatte 54 ein leicht anders geformtes Aufnahmeelement 52'' für die Libelle 2 angeordnet. Dieses umschliesst die Libelle 2 vollständig. Zudem überragt sie den Einschiebekörper 50, insbesondere die Anlageflächen 51.

Zur Montage wird der Magnet 4 auf dem Magnetaufnahmeelement 52' und dem Magnethalter 5 befestigt. Der Magnethalter 5 wird anschliessend über eine offene Stirnfläche 13 des Wasserwaagen-Körpers 1 in diesen hineingeschoben. Hierfür kann eine Montagelehre verwendet werden, mittels der die gewünschte Position innerhalb des Wasserwaagen-Körpers 1 bestimmt werden kann. Die Verschiebbarkeit des Magnethalters 5 wird dabei durch die federnden Abstützbeine 54 und die möglichst kleinen Anlageflächen 51 ermöglicht. Diese Elemente liegen im montierten Zustand an den zwei gegenüberliegenden Seitenwänden 12 im Hohlprofil des Wasserwaagen-Körpers 1 an.
Zur besseren Fixierung kann der Magnethalter mit Klebstoff versehen werden, um so an die Körperinnenwandung geklebt zu werden. Ferner können in der Hohlprofilschiene Fixierungs- oder Justierungselemente für den Magnethalter angebracht werden. Nach der Einführung der Magnethalter 5 werden die Stirnwände 11 des Körpers 1 mittels Abschlusskappen 6 verschlossen.

In Figur 3 ist eine andere Ausführungsform eines Einschiebeelementes dargestellt, das hier als Magnethalter 5' dient. Der Querschnitt des symmetrisch ausgebildeten Einschiebekörpers 50' gleicht einem H, dessen mindestens annähernd parallel zueinander verlaufenden Schenkel die Abstützbeine 53 bilden, welche auf beiden Seiten in die Anlageflächen 51' übergehen. Am Querbalken des H's ist eine t-förmige Andruckplatte 54' angeordnet. Der Magnet 4 ist in diesem Beispiel direkt auf der Andruckplatte 54' befestigt. Die Andruckplatte 54' ist zurückversetzt zu den Anlageflächen 51' angeordnet, wobei der montierte Magnet 4 diesem wiederum leicht vorsteht, so dass er an die Innenwandung des Körpers 1 gepresst werden kann.

Der in Figur 3 dargestellte Magnethalter 5' ist symmetrisch gestaltet, so dass auf beiden Seiten eine Andruckplatte 54' mit einem Magneten 4 angeordnet sein kann. Weitere Ausgestaltungsformen, auch mit mehreren Magneten auf einem Magnethalter, sind möglich.

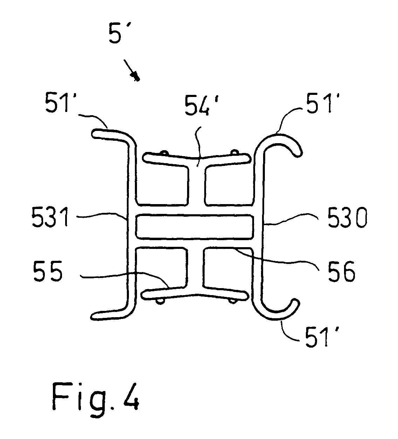

In Figur 4 ist eine dritte Ausführungsform des erfindungsgemässen Magnethalters 5' dargestellt. Sein Querschnitt gleicht wiederum annähernd einem H, an dessen Querbalken annähernd t-förmige Andruckplatten 54' angeordnet sind. Die Andruckplatten sind wiederum zurückversetzt zu den Anlageflächen 51' des Magnethalters 5' angeformt und dienen der Aufnahme der Magnete 4. Die zwei Schenkel 55, welche die Aufnahmefläche für den Magneten bilden, sind nach aussen leicht zueinander hin geneigt, so dass die Federwirkung erhöht wird und der Magnet stärker an die Seitenwand 12 des Körpers 1 gepresst wird.

Im Gegensatz zu dem in Figur 3 dargestellten Ausführungsbeispiel weist dieser Magnethalter erheblich dünnere Wandstärken auf, so dass möglichst materialsparend gefertigt werden kann und die Federwirkung der einzelnen Elemente verstärkt wird. Auf den Schenkeln 55 der Andruckplatten 54' sind Noppen angeformt, welche eine zusätzliche Höhe ergeben, so dass die montierten Magnete wiederum an der Innenwandung des Körpers 1 anliegen. Der Querbalken des H-förmigen Einschiebekörpers 50' besteht aus zwei beabstandet und parallel zueinander verlaufenden Stegen 56, auf welchen je eine Andruckplatte 54' angeformt ist.

Ferner sind die Abstützbeine des Einschiebekörpers 50 unterschiedlich geformt. Beide weisen nach aussen gerichtete, vom Einschubkörper 50 wegweisende Enden auf, welche die Anlageflächen 51' zur Abstützung an der Innenwandung des Körpers 1 bilden. Das in Einschubrichtung vordere Abstützbein 530 weist als Anlageflächen 51' rund gebogene Enden auf. Das andere, in Einschubrichtung nachfolgende Abstützbein 531 weist Anlageflächen 51' auf, welche einen annähernd rechten Winkel bilden, jedoch leicht zu den Seitenwänden 12 des Körpers 1 hingerichtet sind. Der Winkel beträgt in diesem Beispiel 93°.

Das vordere, gebogene Abstützbein 530 erleichtert die Einführung des Magnethalters. Das hintere, rechtwinklige Abstützbein 531 verklemmt ihn im Körper, so dass er auch ohne weitere Fixierungsmittel in der gewünschten Lage haltbar ist.

## Patentansprüche

1. Wasserwaage mit einem aus einem Hohlprofil gebildeten Körper (1), mindestens einer im Körper gehaltenen Libelle (2) und mindestens einem Magneten (4) zur Haftung an einer Messfläche, wobei der mindestens eine Magnet (4) im Innern des Körpers (1) gehalten ist, **dadurch gekennzeichnet, dass** der mindestens eine Magnet (4) auf der Innenseite des Körpers (1) angeordnet ist und durch eine Seitenfläche (12) des Körpers (1) von der Messfläche getrennt ist, und dass die Wasserwaage mindestens ein als Magnethalter (5) dienendes Einschiebeelement aufweist, auf dem der mindestens eine Magnet (4) angeordnet ist, wobei das Einschiebeelement in den Körper (1) einschiebbar und im montierten Zustand in diesem gehalten ist.

2. Wasserwaage nach Anspruch 1, **dadurch gekennzeichnet, dass** der Magnet (4) an der Innenwandung des Körpers (1) anliegt.

3. Wasserwaage nach Anspruch 2, **dadurch gekennzeichnet, dass** der Körper (1) aus einer Hohlprofilschiene mit rechteckigem Querschnitt besteht, dass der Magnethalter (5) über eine Stirnfläche (13) einschiebbar ist und dass der Magnethalter (5) im montierten Zustand an zwei gegenüberliegenden Seitenwänden (12) des Körpers (1) anliegt.

4. Wasserwaage nach einem der Ansprüche 1 oder 3, **dadurch gekennzeichnet, dass** der Magnethalter (5) Federelemente (53,54,54') zur federnden, kraftschlüssigen Halterung im Körper (1) aufweist.

5. Wasserwaage nach einem der Ansprüche 1 oder 3, **dadurch gekennzeichnet, dass** der Magnethalter (5) mindestens auf einer der Schmalseite zwei voneinander beabstandete Anlageflächen (51,51') zur Anlage an einer Seitenwand (12) des Körpers (1) aufweist, wobei zwischen den Anlageflächen (51,51') der Magnet (4) auf einer gefederten Andruckplatte (54) gehalten ist und im montierten Zustand gefedert an die Innenwandung des Körpers (1) gepresst ist.

6. Wasserwaage nach Anspruch 1, **dadurch gekennzeichnet, dass** mehrere Magnethalter (5) mit Magneten (4) vorhanden sind.

7. Wasserwaage nach einem der Ansprüche 1 oder 6, **dadurch gekennzeichnet, dass** auf dem Magnethalter (5) mehrere Magnete (4) befestigbar sind.

8. Wasserwaage nach Anspruch 1, **dadurch gekennzeichnet, dass** mindestens eine Libelle (2) auf einem Libellenhalter (3) befestigt ist, der dieselbe Form wie der Magnethalter (5) aufweist.

9. Wasserwaage nach Anspruch 5, **dadurch gekennzeichnet, dass** die in Einschubrichtung vordere Anlagefläche (51') gebogen ist zur erleichterten Einführung des Magnethalters (5) und dass die andere Anlagefläche (51') annähernd einen rechten Winkel bildet zur klemmenden Halterung des Magnethalters (5) im Körper (1).

10. Wasserwaage nach Anspruch 5 oder 9, **dadurch gekennzeichnet, dass** der Magnethalter (5) H-förmig gestaltet ist mit zwei über einen Querbalken miteinander verbundenen Abstützbeinen (53), welche beidseitig in Anlageflächen (51,51') enden und dass zwei Andruckplatten (54) vorhanden sind, welche beidseitig auf dem Querbalken angeordnet sind.

## Claims

1. A spirit level with a body (1) formed of a hollow profile, with at least one bubble level (2) held in the body and with at least one magnet (4) for the adhesing on a measuring surface, wherein the at least one magnet (4) is held in the inside of the body (1), **characterised in that** the at leas one magnet (4) is arranged on the inner side of the body (1) and is separated by a side surface (12) of the body (1) from the measuring surface, and that the spirit level comprises at least on insertion element serving as a magnet holder (5), on which the at least one magnet is arranged, wherein the insertion element is insertable into the body (1) and in the assembled condition is held in this.

2. A spirit level according to claim 1, **characterised in that** the magnet (4) bears on the inner walling of the body (1).

3. A spirit level according to claim 2, **characterised in that** the body (1) consists of a hollow profile rail with a rectangular cross section, that the magnet holder (5) via an end face (13) is insertable and that the magnet holder (5) in the assembled condition bears on two oppositely lying side walls (12) of the body (1).

4. A spirit level according to one of the claims 1 or 3, **characterised in that** the magnet holder (5) comprises spring elements (53, 54, 54') for the resilient non-positive holding in the body (1),

5. A spirit level according to one of the claims 1 or 3, **characterised in that** the magnet holder (5) comprises at least on one of the narrow sides two resilient bearing surfaces (51, 51') distanced to one another, for the bearing on a side wall (12) of the body (1), wherein between the bearing surfaces (51, 51') the magnet (4) is held on a sprung pressing plate (54) and in the assembled condition is resliently pressed onto the inner walling of the body.

6. A spirit level according to claim 1, **characterised in that** several magnet holders (5) with magnets (5) are present .

7. A spirit level according to one of the claims 1 or 6, **characterised in that** on the magnet holder (5) there are fastenable several magnets (4).

8. A spirit level according to claim 1, **characterised in that** at least one bubble level is fastened on a bubble level holder (3) which has the same shape as the magnet holder (5).

9. A spririt level according to claim 5, **characterised in that** the bearing surface (51) which is at the front in the direction of insertion is bent for the simplified introduction of the magnet holder (5) and that the other bearing surface (51') forms approximately a right angle for the clamping mounting of the magnet holder (5) in the body (1).

10. A water weight according to claim 5 or 9, **characterised in that** the magnet holder (5) is configured H-shaped with two support legs (53) connected to one another via a transverse strut, which on both sides end in bearing surfaces (51, 51') and that two pressing plates (54) are present which are arranged on the transverse strut on both sides.

## Revendications

1. Niveau à bulle ayant un corps (1) formé d'un profil creux, d'au moins une nivelle (2) maintenue dans le corps et d'au moins un aimant (4) pour la fixation à une surface de mesure, tandis que le ou les aimants (4) sont maintenus à l'intérieur du corps (1), **caractérisé en ce que** le ou les aimants (4) sont disposés sur la face interne du corps (1) et sont séparés de la surface de mesure par une surface latérale (12) du corps (1), et que le niveau à bulle présente au moins un élément coulissant servant de support d'aimant (5), sur lequel le ou les aimants (4) sont disposés, tandis que l'élément coulissant peut être introduit par coulissement dans le corps (1) et est maintenu dans celui-ci à l'état monté.

2. Niveau à bulle selon la revendication 1, **caractérisé en ce que** l'aimant (4) se situe sur la paroi interne du corps (1).

3. Niveau à bulle selon la revendication 2, **caractérisé en ce que** le corps (1) consiste en une barre à profil creux ayant une section rectangulaire, que le support d'aimant (5) peut être introduit par une face frontale (13) et que le support d'aimant (5) dans l'état monté adhère à deux parois latérales (12) opposées du corps (1).

4. Niveau à bulle selon l'une des revendications 1 ou 3, **caractérisé en ce que** le support d'aimant (5) présente des éléments de ressort (53,54,54') pour le maintien par adhérence, par effet de ressort dans le corps (1).

5. Niveau à bulle selon l'une des revendications 1 ou 3, **caractérisé en ce que** le support d'aimant (5) présente au moins sur l'une des tranches deux surfaces d'appui distantes l'une de l'autre (51,51') pour l'appui sur une paroi latérale (12) du corps (1), tandis qu'entre les surfaces d'appui (51,51') l'aimant (4) est maintenu sur une plaque de pression à ressort (54) et, à l'état monté, est pressé par effet de ressort contre la paroi interne du corps (1).

6. Niveau à bulle selon la revendication 1, **caractérisé en ce que** plusieurs supports d'aimants (5) avec des aimants (4) sont présents.

7. Niveau à bulle selon l'une des revendications 1 ou 6, **caractérisé en ce que** sur le support d'aimant (5) peuvent être fixés plusieurs aimants (4).

8. Niveau à bulle selon la revendication 1, **caractérisé en ce qu'**au moins une nivelle (2) est fixée sur un support de nivelle (3), qui présente la même forme que le support d'aimant (5).

9. Niveau à bulle selon la revendication 5, **caractérisé en ce que** la surface d'appui antérieure (51') dans le sens de l'introduction est courbée pour faciliter l'introduction du support d'aimant (5) et que l'autre surface d'appui (51') forme approximativement un angle droit pour le maintien par pincement du support d'aimant (5) dans le corps (1).

10. Niveau à bulle selon la revendication 5 ou 9, **caractérisé en ce que** le support d'aimant (5) a la forme d'un H avec deux jambes d'appui (53) reliées entre elles par une barre transversale, qui se terminent des deux côtés dans les surfaces d'appui (51,51'), et que sont présentes deux plaques de pression (54), qui sont disposées des deux côtés sur les barres transversales.
